# EUROPÄISCHE PATENTSCHRIFT

(11) **EP 0 723 900 B1**
(45) Veröffentlichungstag und Bekanntmachung des Hinweises auf die Patenterteilung: **12.05.1999**
(21) Anmeldenummer: 95120091.4
(22) Anmeldetag: 19.12.1995
(51) Int. Cl.: B61K 5/00

(54) **Verschiebeeinrichtung zum horizontalen Verschieben schwerer Lasten**
Shifting device for horizontally shifting heavy loads
Dispositif de déplacement pour déplacer horizontalement des charges lourdes

(30) Priorität: 26.01.1995 DE 19502292
(43) Veröffentlichungstag der Anmeldung: 31.07.1996
(73) Patentinhaber: Lukas Hydraulik GmbH & Co. KG., D-91058 Erlangen (DE)
(72) Erfinder: Heller, Heinz, D-91056 Erlangen (DE); Hesse, Dieter, D-91052 Erlangen (DE); Kuhlmann, Wolf, Dr., D-90419 Nürnberg (DE)
(74) Vertreter: Hafner, Dieter, Dr.rer.nat., Dipl.-Phys.

(56) Entgegenhaltungen:
- US-A- 3 362 351

## Beschreibung

Die Vorliegende Erfindung betrifft eine Verschiebeeinrichtung zum horizontalen Verschieben schwerer Lasten gemäß dem Oberbegriff des Patentanspruchs 1.

Haupteinsatzgebiet derartiger Verschiebeeinrichtungen ist die Aufgleistechnik, bei der entgleiste Lokomotiven, Waggons etc. mit Hilfe derartiger Verschiebeeinrichtungen wieder auf das Gleis gehoben werden können.

Herkömmliche Verschiebeeinrichtungen der Aufgleistechnik sind dadurch gekennzeichnet, daß der Hebezylinder mittels eines Verschiebezylinders, dessen Kolbenstange sich über eine an der Oberseite einer Auflage eingreifende Klaue an letzterer abstützt, nur in eine Richtung verschoben werden kann. Ist die Kolbenstange voll ausgefahren, muß eine Bedienungsperson, die an der Auflage eingreifende Klaue herausnehmen, die Kolbenstange verschieben und an der in Verschieberichtung nächsten Ausnehmung wieder einsetzen. Ferner sind beispielsweise bei der Deutschen Bundesbahn lediglich Hilfszüge mit derartigen Aufgleisausrüstungen ausgestattet, die im Bedarfsfall, d.h. bei einer Entgleisung eigens angefordert werden müssen. Darüber hinaus wurden in solchen Fällen durch Seilwinden oder mechanische Heber eingesetzt, die jedoch unter Umständen zu Beschädigungen der Laufräder sowie Lagerungen der Lokomotive bzw. des Waggons führen konnten.

Aus US-A-3,362,351 ist eine Verschiebeeinrichtung zum horizontalen Verschieben schwerer Lasten, insbesondere entgleister Schienenfahrzeuge bekannt, welche einen Hebezylinder sowie eine Verschiebezylinderanordung aufweist, wodurch die mittels des Hebezylinders angehobene Last in ihrer Lage verändert werden kann. Der Hebezylinder wird von einem horizontal bewegbaren und auf einer Unterlage angeordneten Schlitten getragen.

Diese Verschiebeanordnung besitzt jedoch den Nachteil, daß eine in der Praxis häufig auftretende seitliche Versetzung während des Verschiebeprozesses nicht ermöglicht wird. Aufgrund der beidseitig zum jeweiligen Verschiebezylinder angeordneten Verschiebezylinder Kolbenanordnungen ist die vorgestellte Verschiebeanordnung aufwendig gebaut und störanfällig.

Die Aufgabe der vorliegenden Erfindung besteht darin, eine Verschiebeeinheit zu schaffen, die bei vereinfachter Konstruktion eine Verschiebung schwerer Lasten mit hoher Sicherheit gewährleistet.

Diese Aufgabe wird bei der gattungsgemäßen Verschiebeeinrichtung durch die Merkmale des kennzeichnenden Teils von Patentanspruch 1 gelöst.

Die Erfindung ermöglicht den Einsatz eines Kompaktgerätes, welches eine Verschiebung der Last ermöglicht, ohne daß eine Bedienungsperson sich unter die Last begeben muß, um die Abstützung der Kolbenstange zur Auflage in ihrer Lage zu verändern. Die Verschiebeeinrichtung kann hierbei derart ausgelegt sein, daß sie entweder lediglich in einer Richtung, vorzugsweise aber in zwei entgegengesetzten Richtungen betrieben werden kann.

Zur Sicherung der Verschiebeposition der Last ist gemäß AnSpruch 2 zweckmäßigerweise ein Feststellventil vorgesehen.

Die Verschiebezylinderanordnung kann in Form eines Gleichgangzylinders oder gegebenenfalls Teleskop-Gleichgangzylinders realisiert sein. Letztere hat den Vorteil, daß die Verschiebelänge bezogen auf die Gesamtlänge der Einrichtung zusätzlich vergrößert werden kann. Beide gewährleisten eine Bewegung des Zylinders in zwei Richtungen.

Der Einsatz einer zum Schlitten verschiebbaren Cleitplatte ermöglicht eine nicht lineare Verschiebung der Last beispielsweise entlang eines Kreisbogens, wodurch Verspannungen und daraus resultierende Gefährdungen bzw. Instabilitäten der Last wirksam ausgeschlossen werden können.

Zweckmäßigerweise werden Gleitplatte sowie Schlitten lediglich unter Einsatz eines entsprechenden Vorsprungs sowie einer entsprechend dimensionierten Ausnehmung aufeinandergesteckt.

Eine variationsmöglichkeit des Verschiebeweges der erfindungsgemäßen Verschiebeeinrichtung kann zudem dadurch geschaffen werden, daß an der Oberseite des Schlittens eine Mehrzahl von Ausnehmungen vorgesehen ist, in die die Gleitplatte wahlweise einsetzbar ist.

Die Auflage besteht zweckmäßigerweise aus zwei voneinander beabstandeten, über eine Befestigungsplatte bzw. Befestigungsteil miteinander verbundenen Vierkantrohren, zwischen den sich die Verschiebezylinderanordnung bzw. der Gleichgangzylinder befindet.

Die Auflage kann in vorteilhafter Weise auch als einteiliges Gußteil, insbesondere Aluminiumgußteil ausgebildet sein. Die Befestigung der Verschiebezylinderanordnung erfolgt über je eine beidseitig vorgesehene Abschlußplatte.

Zum Ausgleich von Höhentoleranzen können an der Oberseite der Gleitplatte, zweckmäßigerweise an einer entsprechenden Ausnehmung hierfür, unterschiedliche Distanzstücke einsetzbar sein.

Die Gleitmaterialscheiben gemäß Anspruch 13 wirken einerseits, indem sie den Gleitwiderstand zwischen Schlitten und Auflage erniedrigen andererseits aber gleichzeitig die Oberfläche der Auflage ständig reinigen.

Der Gegenstand des Anspruchs 11 hat den Vorteil, daß man hinsichtlich der Aufbauhöhe nicht von der Oberkante der Schienenanordnung abhängig ist, die bei herkömmlichen Aufgleiseinrichtungen die Auflage für entsprechende Querträger bilden.

Die Versorgung des Verschiebezylinders mit Hydrauliköl erfolgt zweckmäßigerweise über die Kolbenstange. Der Verschiebezylinder sowie Hebezylinder wird jeweils von einer eigenen entweder manuell oder aber motorisch angetriebenen Pumpe beaufschlagt, was die Sicherheit des Systems erhöht.

Anspruch 16 zeigt eine zweckmäßige Ausgestaltung der erfindungsgemäßen Verschiebeeinrichtung als Zwei-Punkt-Verschiebeeinrichtung. Die erfindungsgemäße Verschiebeeinrichtung eignet sich hierzu aufgrund ihrer Konstruktion besonders gut.

Nachstehend werden mehrere Ausgestaltungen der erfindungsgemäßen Verschiebeeinrichtung anhand der Zeichnungen näher erläutert. Es zeigen:
- Fig. 1: eine zweckmäßige Ausgestaltung der erfindungsgemäßen Verschiebeeinrichtung in Teilschnittdarstellung;
- Fig. 2: die Verschiebeeinrichtung gemäß Fig. 1 in Seitendarstellung ebenfalls im Teilschnitt;
- Fig. 3: die Verschiebeeinrichtung gemäß den Fig. 1 und 2 in Draufsicht mit Darstellung der zum Betrieb vorgesehenen Pumpen;
- Fig. 4: eine weitere Ausgestaltung der erfindungsgemäßen Verschiebeeinrichtung unter Verwendung einer Auflage in Form eines Gußteils sowohl in Seiten- als auch in Stirnseitendarstellung des Gußteils einschließlich des Schlittens;
- Fig. 5: eine Darstellung zweier über ein Gestänge miteinander gekoppelter Verschiebeeinheiten zur Gewährleistung einer Zwei-Punkt-Anhebung in Seitenansicht sowie
- Fig. 6: eine stark vereinfachte, schematische Darstellung des Einsatzes eines Distanzstücks.

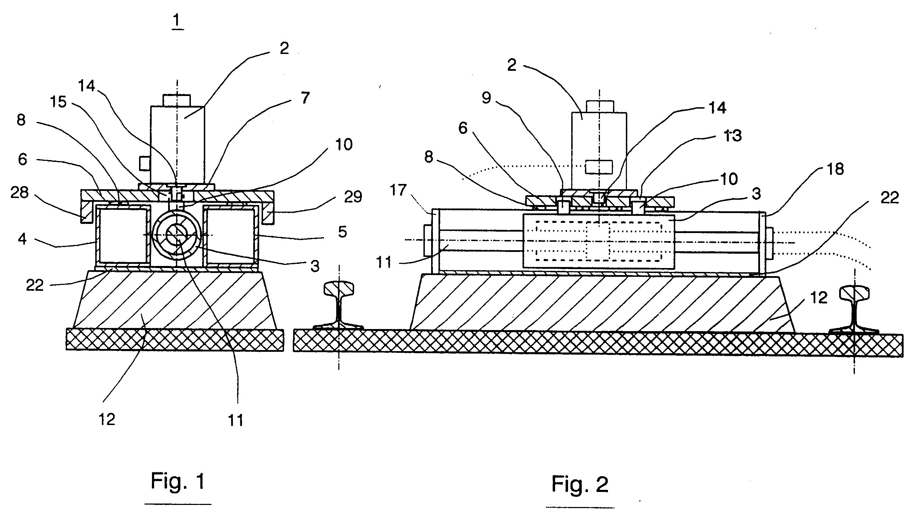

Das Bezugszeichen 1 in Fig. 1 kennzeichnet die Verschiebeeinrichtung in ihrer Gesamtheit. Sie umfaßt einen üblichen Hebezylinder 2, der an der Oberseite eines entlang einer Auflage bewegbaren Schlittens 6 mit nach unten verlaufenden seitlichen Rändern 28, 29 angeordnet ist. Zwischen dem Hebezylinder 2 und dem Schlitten 6 befindet sich eine Gleitplatte 7.

Die Auflage wird durch zwei an einer Befestigungsplatte 22 in Abstand zueinander angeordneter Vierkantrohre 4, 5 gebildet, an deren Oberseiten Gleitmaterialscheiben 8 zur Erhöhung der Gleitfähigkeit des Schlittens 6 vorgesehen sind. An der Unterseite der Verschiebeeinrichtung 1 gemäß dieser Ausgestaltung ist eine separate Unterlage 12, beispielsweise in Form eines Metall- oder Holzbocks vorgesehen.

Zwischen den beiden Vierkantrohren 4, 5 befindet sich ein sogenannter Gleichgangzylinder 3, vorzugsweise Teleskopgleichgangzylinder, welcher über axial hintereinander angeordnete an der Oberseite vorgesehene Vorsprünge 9 und 10, die in eine Ausnehmung 13 am Schlitten 6 eingreifen, letzteren in der Horizontalen bewegt.

Wie aus Fig. 2 ersichtlich ist das jeweilige Ende der Kolbenstange 11 an einer querverlaufenden Abschlußplatte 17 bzw. 18 befestigt, welche jeweils gleichzeitig den Abschluß der beiden Vierkantrohre 4, 5 bildet.

Die Gleitplatte 7 weist einen Haltevorsprung 14 auf, welcher in eine entsprechende Ausnehmung 15 am Schlitten 6 eingreift. Die Dimensionierung der Ausnehmung 15 ist hierbei derart gewählt, daß eine Verschiebbarkeit der Gleitplatte 7 relativ zum Schlitten 6 gewährleistet ist. Aufgrund dieser Konstruktion kann die Gleitplatte 7 mit ihrem Haltevorsprung 14 lediglich in die Ausnehmung 15 an der Oberseite des Schlittens 6 eingesteckt werden.

An der Oberseite des Schlittens 6 können (in den Figuren nicht dargestellte) zusätzliche Ausnehmungen in bestimmter Anordnung vorgesehen sein, um die Verschiebevariabilität zusätzlich zu erhöhen.

Wie aus Fig. 2 ersichtlich, steht der Gleichgangzylinder 3 mit insgesamt zwei Vorsprüngen 9 und 10 mit dem Schlitten 6 in Verbindung.

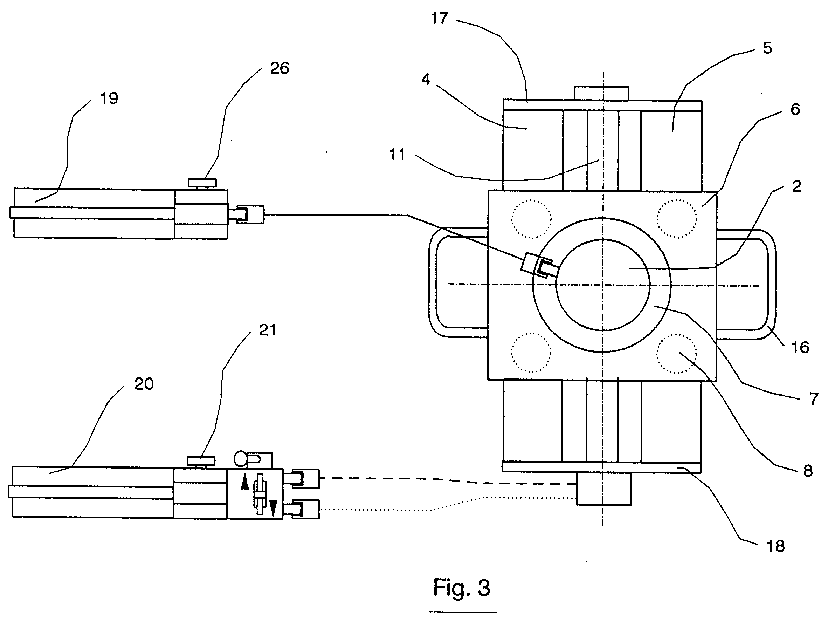

Gemäß Fig. 3 wird der Gleichgangzylinder 3 sowie Hebezylinder 2 jeweils über separate, d.h. voneinander unabhängige Pumpen 19 bzw. 20 betrieben.

Beide Pumpen 19, 20 und mit je einem Feststellventil 26 bzw. 21 ausgestattet, um eine sichere Fixierung der Last im jeweiligen Verschiebe- bzw. Hebezustand zu gewährleisten. Die beiden Pumpen 19, 20 können entweder als Handpumpen oder als motorisch angetriebene Pumpen ausgebildet sein.

Weiterhin wird aus Fig. 3 deutlich, daß die Hydraulikölversorgung des Gleichgangszylinders 3 axial über die Kolbenstange 11 erfolgt. Die Verschiebeeinrichtung 1 ist mit zwei seitlich angeordneten Handgriffen 16 versehen, wodurch die Verschiebeeinrichtung 1 gleichsam als mobile Verschiebeeinrichtung 1 sehr einfach zu transportieren und handzuhaben ist.

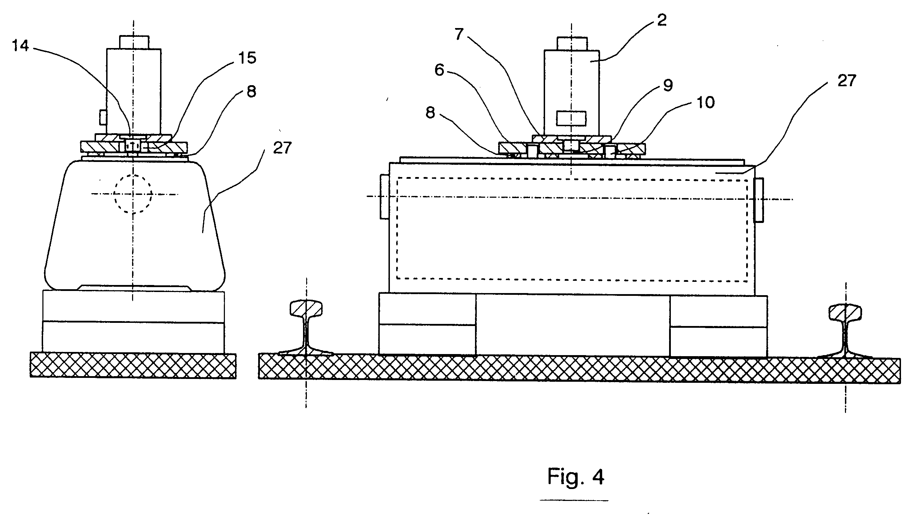

Fig. 4 zeigt in Abänderung der Ausgestaltung gemäß den Fig. 1 - 3 eine Verschiebeeinrichtung 1 mit einer Auflage in Form eines Gußteils 27, welches auf zwei im Endbereich angeordneten Böcken positioniert ist.

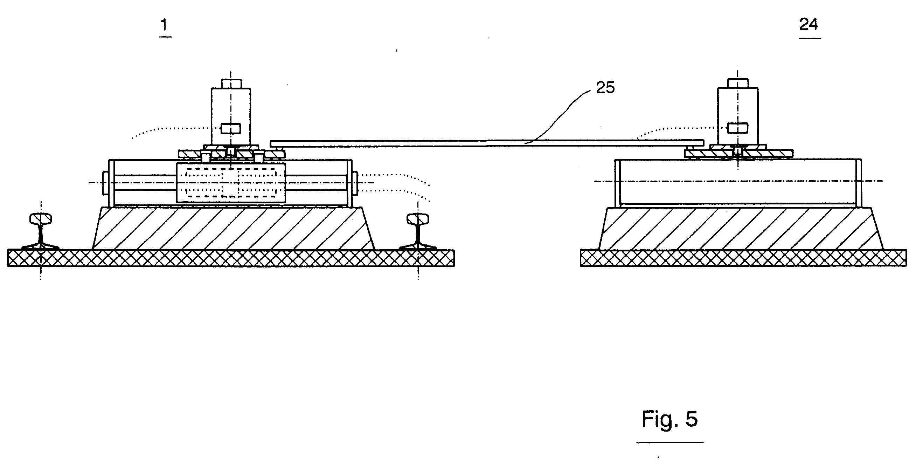

Fig. 5 zeigt eine Anordnung mit zwei über ein Gestänge 25 verbundene Verschiebeeinrichtungen zur Gewährleistung einer Zwei-Punkt-Anhebung. Hierbei genügt es, wenn lediglich eine Verschiebeeinrichtung z.B. die Verschiebeeinrichtung 1 im Gegensatz zur Verschiebeeinrichtung 24 angetrieben ist.

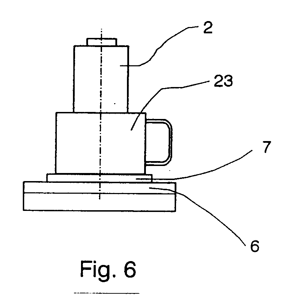

Zur Einstellung der gewünschten Höhe des Hebezylinders 2 kann gemäß Fig. 6 zwischen der Gleitplatte 7 und dem Hebezylinder 2 ein Distanzstück 23 erforderlicher Größe eingesetzt werden. Hierzu kann an der Oberseite der Gleitplatte 7 zweckmäßigerweise eine Aussparung für den Einsatz der betreffenden Distanzstücke vorgesehen sein.

Die Erfindung ermöglicht den Einsatz einer leicht transportier- sowie handhabbaren Verschiebeeinrichtung, bei der während des Verschiebevorgangs keine Umstellung der Verschiebeeinrichtung durch Bedienungspersonal zur erfolgen hat. Sie stellt daher auf dem einschlägigen Gebiet der Technik eine besondere Bereicherung dar.

### BEZUGSZEICHEN

- 1: Verschiebeeinrichtung
- 2: Hebezylinder
- 3: Gleichgangzylinder
- 4: Vierkantrohr
- 5: Vierkantrohr
- 6: Schlitten
- 7: Gleitplatte
- 8: Gleitmaterialscheibe
- 9: Vorsprung
- 10: Vorsprung
- 11: Kolbenstange
- 12: Unterlage
- 13: Ausnehmung
- 14: Haltevorsprung
- 15: Ausnehmung
- 16: Handgriff
- 17: Abschlußplatte
- 18: Abschlußplatte
- 19: Pumpe
- 20: Pumpe
- 21: Feststellventil
- 22: Befestigungsplatte
- 23: Distanzstück
- 24: weitere Verschiebeeinheit
- 25: Gestänge
- 26: Feststellventil
- 27: Gußteil
- 28: Rand
- 29: Rand

## Patentansprüche

1. Verschiebeeinrichtung zum horizontalen Verschieben schwerer Lasten, insbesondere entgleister Schienenfahrzeuge, mit einem Hebezylinder einer angetriebenen, mindestens einen Verschiebezylinder und eine Kolbenstange aufeisenden horizontalen Verschiebezylinderanordnung, die es erlaubt, die mittels des Hebezylinders angehobene Last in ihrer Lage zu verändern, wobei der Hebezylinder von einem horizontal, in zwei entgegengesetzten Richtungen bewegbaren Schlitten getragen ist und der Schlitten an der Oberfläche einer Auflage verschiebbar angeordnet ist,
**dadurch gekennzeichnet, daß**
die Kolbenstange (11) der Verschiebezylinderanordnung starr mit der Auflage in Verbindung steht, die Verschiebezylinderanordnung entlang der Kolbenstange (11) bewegbar ist und mit dem Schlitten (6) in Wirkverbindung steht.

2. Verschiebeeinrichtung nach Anspruch 1,
**dadurch gekennzeichnet**,
daß ein Feststellventil (21) vorgesehen ist, um die jeweilige Position der Verschiebezylinderanordnung zu sichern.

3. Verschiebeeinrichtung nach Anspruch 1 oder 2,
**dadurch gekennzeichnet**,
daß als Verschiebezylinderanordnung ein Gleichgangzylinder (3) vorgesehen ist.

4. Verschiebeeinrichtung nach Anspruch 1 oder 2,
**dadurch gekennzeichnet**,
daß als Verschiebezylinderanordnung ein Teleskop-Gleichgangzylinder vorgesehen ist.

5. Verschiebeeinrichtung nach einein der vorhergehenden Ansprüche,
**dadurch gekennzeichnet**,
daß zwischen Hebezylinder (2) und Schlitten (6) eine Gleitplatte (7) verschiebbar zuin Schlitten (6) vorgesehen ist.

6. Verschiebeeinrichtung nach Anspruch 5,
**dadurch gekennzeichnet**,
daß die Gleitplatte (7) über einen Haltevorsprung (14) mit dem Schlitten (6) in Verbindung steht, wobei der Haltevorsprung (14) in eine entsprechende Ausnehmung (15) am Schlitten (6) oder umgekehrt eingreift und die Ausnehmung (15) gegenüber dem Haltevorsprung (14) derart dimensioniert ist, daß eine seitliche Bewegung der Gleitplatte (7) insbesondere in Querrichtung zur Bewegungsrichtung des Schlittens (6) möglich ist.

7. Verschiebeeinrichtung nach Anspruch 6,
**dadurch gekennzeichnet**,
daß mehrere Ausnehmungen (15) am Schlitten (6) vorgesehen sind, in die der Haltevorsprung (14) der Gleitplatte (7) einsetzbar ist.

8. Verschiebeeinrichtung nach einem der vorhergehenden Ansprüche,
**dadurch gekennzeichnet**,
daß die Auflage voneinander beabstandete, über eine Befestigungsplatte oder Befestigungsteil miteinander verbundene Vierkantrohre (4, 5) aufweist und die Verschiebezylinderanordnung sich zwischen den beiden Vierkantrohren (4, 5) befindet.

9. Verschiebeeinrichtung nach Anspruch 8,
**dadurch gekennzeichnet**,
daß die Auflage als einteiliges Gußteil, insbesondere Aluminiumgußteil ausgebildet ist.

10. Verschiebeeinrichtung nach einem der vorhergehenden Ansprüche,
**dadurch gekennzeichnet**,
daß an jedem Ende der Auflage, insbesondere der Vierkantrohre (4, 5) eine Abschlußplatte (17 bzw. 18) vorgesehen ist, an der jeweils die Kolbenstange der Verschiebezylinderanordnung befestigt ist.

11. Verschiebeeinrichtung nach einem der vorhergehenden Ansprüche,
**dadurch gekennzeichnet**,
daß zur Gewährleistung einer bestimmten Bauhöhe ein fester Unterbau oder eine separate Unterlage (12) vorgesehen ist.

12. Verschiebeeinrichtung nach einem der vorhergehenden Ansprüche,
**dadurch gekennzeichnet**,
daß zwischen Hebezylinder (2) und Gleitplatte (7) Distanzstücke (23) einsetzbar sind.

13. Verschiebeeinrichtung nach einem der vorhergehenden Ansprüche,
**dadurch gekennzeichnet**,
daß zwischen Auflage bzw. Vierkantrohre (4, 5) und Schlitten (6) Gleitmaterialscheiben (8) vorgesehen sind.

14. Verschiebeeinrichtung nach einem der vorhergehenden Ansprüche,
**dadurch gekennzeichnet**,
daß die Versorgung der Verschiebezylinderanordnung mit Hydrauliköl über die Kolbenstange (11) erfolgt.

15. Verschiebeeinrichtung nach einem der vorhergehenden Ansprüche,
**dadurch gekennzeichnet**,
daß die Betätigung der Verschiebezylinderanordnung und/oder des Hebezylinders (2) durch je eine manuell oder motorisch betriebene Pumpe (19 bzw. 20) erfolgt.

16. Verschiebeeinrichtung nach einem der vorhergehenden Ansprüche,
**dadurch gekennzeichnet**,
daß zur Gewährleistung einer Zwei-Punkt-Anhebung eine Verschiebeeinheit (1) mit einer weiteren, vorzugsweise nicht angetriebenen Verschiebeeinheit (24) über ein an der jeweiligen Verschiebeeinheit (1 bzw. 24) verschwenkbar angelenktes Gestänge (25) gekoppelt ist.

## Claims

1. Shifting device for horizontally shifting heavy loads, especially derailed rail vehicles, having a lifting cylinder of a driven horizontal shifting cylinder arrangement which has at least one shifting cylinder and a piston rod and which enables the position of the load raised by the lifting cylinder to be altered, the lifting cylinder being carried by a slide which is horizontally movable in two opposing directions and the slide being displaceably arranged on the surface of a support, characterised in that the piston rod (11) of the shifting cylinder arrangement is connected rigidly to the support, the shifting cylinder arrangement is movable along the piston rod (11) and is in operative connection with the slide (6).

2. Shifting device according to claim 1, characterised in that a locking valve (21) is provided in order to secure the particular position of the shifting cylinder arrangement.

3. Shifting device according to claim 1 or 2, characterised in that a synchronous cylinder (3) is provided as the shifting cylinder arrangement.

4. Shifting device according to claim 1 or 2, characterised in that a telescopic synchronous cylinder is provided as the shifting cylinder arrangement.

5. Shifting device according to any one of the preceding claims, characterised in that a sliding plate (7) is provided between the lifting cylinder (2) and the slide (6) in such a manner that it is displaceable relative to the slide (6).

6. Shifting device according to claim 5, characterised in that the sliding plate (7) is connected to the slide (6) by means of a holding projection (14), the holding projection (14) engaging in a corresponding recess (15) in the slide (6) or vice versa and the recess (15) being so dimensioned relative to the holding projection (14) that a lateral movement of the sliding plate (7) is possible, especially in the transverse direction relative to the direction of movement of the slide (6).

7. Shifting device according to claim 6, characterised in that several recesses (15) into which the holding projection (14) of the sliding plate (7) is insertable are provided on the slide (6).

8. Shifting device according to any one of the preceding claims, characterised in that the support has rectangular tubes (4, 5) which are spaced apart from one another and which are connected to one another by means of a securing plate or securing component, and the shifting cylinder arrangement is located between the two rectangular tubes (4, 5).

9. Shifting device according to claim 8, characterised in that the support is in the form of a one-piece casting, especially an aluminium casting.

10. Shifting device according to any one of the preceding claims, characterised in that there is provided at each end of the support, especially the rectangular tubes (4, 5), an end plate (17 and 18, respectively) to each of which the piston rod of the shifting cylinder arrangement is secured.

11. Shifting device according to any one of the preceding claims, characterised in that a secure substructure or a separate base (12) is provided to ensure a specific overall height.

12. Shifting device according to any one of the preceding claims, characterised in that distance pieces (23) are insertable between the lifting cylinder (2) and the sliding plate (7).

13. Shifting device according to any one of the preceding claims, characterised in that sliding material discs (8) are provided between the support, or the rectangular tubes (4, 5), and the slide (6).

14. Shifting device according to any one of the preceding claims, characterised in that the shifting cylinder arrangement is supplied with hydraulic oil by way of the piston rod (11).

15. Shifting device according to any one of the preceding claims, characterised in that the operation of the shifting cylinder arrangement and/or the lifting cylinder (2) is effected by a respective manually or motor driven pump (19 and 20, respectively).

16. Shifting device according to any one of the preceding claims, characterised in that, in order to ensure two-point lifting, a shifting unit (1) is coupled to a further, preferably non-driven, shifting unit (24) by means of a linkage (25) which is pivotably articulated to the respective shifting unit (1 and 24).

## Revendications

1. Dispositif de déplacement pour déplacer horizontalement des charges lourdes, en particulier des véhicules ferroviaires ayant déraillé, comprenant un vérin de soulèvement qui fait partie d'un ensemble entraîné à vérin de déplacement horizontal qui comporte au moins un vérin de déplacement et une tige de piston et qui permet de modifier la position de la charge soulevée au moyen du vérin de soulèvement, le vérin de soulèvement étant porté par un chariot horizontal mobile dans deux directions opposées et le chariot étant disposé mobile sur la surface d'un support,
caractérisé en ce que la tige de piston (11) de l'ensemble à vérin de déplacement est rigidement reliée au support, et en ce que l'ensemble à vérin de déplacement est mobile le long de la tige de piston (11) et se trouve en liaison d'actionnement avec le chariot (6).

2. Dispositif de déplacement suivant la revendication 1, caractérisé en ce qu'il est prévu une vanne de blocage (21) afin de fixer la position de l'ensemble à vérin de déplacement.

3. Dispositif de déplacement suivant la revendication 1 ou 2, caractérisé en ce qu'il est prévu un vérin synchrone (3) en tant qu'ensemble à vérin de déplacement.

4. Dispositif de déplacement suivant la revendication 1 ou 2, caractérisé en ce qu'il est prévu un vérin synchrone télescopique en tant qu'ensemble à vérin de déplacement.

5. Dispositif de déplacement suivant l'une des revendications précédentes, caractérisé en ce qu'il est prévu entre le vérin de soulèvement (2) et le chariot (6) une plaque de glissement (7) mobile par rapport au chariot (6).

6. Dispositif de déplacement suivant la revendication 5, caractérisé en ce que la plaque de glissement (7) est reliée au chariot (6) par l'intermédiaire d'une saillie de retenue (14), laquelle pénètre dans un évidement correspondant (15) du chariot (6) ou inversement, l'évidement (15) étant dimensionné par rapport à la saillie de retenue (14) de manière à permettre un déplacement latéral de la plaque de glissement (7), en particulier perpendiculairement à la direction de déplacement du chariot (6).

7. Dispositif de déplacement suivant la revendication 6, caractérisé en ce que le chariot (6) comporte plusieurs évidements (15) dans lesquels peut pénétrer la saillie (14) de la plaque de glissement (7).

8. Dispositif de déplacement suivant l'une des revendications précédentes, caractérisé en ce que le support comprend des profilés tubulaires rectangulaires (4, 5) espacés l'un de l'autre et reliés l'un à l'autre par l'intermédiaire d'une plaque de fixation ou d'une pièce de fixation, et en ce que l'ensemble à vérin de déplacement se trouve entre les deux profilés tubulaires (4, 5).

9. Dispositif de déplacement suivant la revendication 8, caractérisé en ce que le support est constitué par une pièce moulée monobloc, en particulier une pièce moulée monobloc en aluminium.

10. Dispositif de déplacement suivant l'une des revendications précédentes, caractérisé en ce qu'à chaque extrémité du support, en particulier des profilés tubulaires rectangulaires (4, 5), est prévue une plaque de fermeture (17 ou 18) à laquelle est fixée la tige de piston de l'ensemble à vérin de déplacement.

11. Dispositif de déplacement suivant l'une des revendications précédentes, caractérisé en ce que, pour obtenir une hauteur déterminée, il est prévu une substructure fixe ou une base séparée (12).

12. Dispositif de déplacement suivant l'une des revendications précédentes, caractérisé en ce que des entretoises (23) peuvent être insérées entre le vérin de soulèvement (2) et la plaque de glissement (7).

13. Dispositif de déplacement suivant l'une des revendications précédentes, caractérisé en ce que des disques (8) en matériau anti-friction sont prévus entre le support ou les profilés tubulaires rectangulaires (4, 5) et le chariot (6).

14. Dispositif de déplacement suivant l'une des revendications précédentes, caractérisé en ce que l'alimentation en huile hydraulique de l'ensemble à vérin de déplacement s'effectue par l'intermédiaire de la tige de piston (11).

15. Dispositif de déplacement suivant l'une des revendications précédentes, caractérisé en ce que l'actionnement de l'ensemble à vérin de déplacement et/ou du vérin de soulèvement (2) est réalisé au moyen de pompes respectives (19 ou 20) manuelles ou motorisées.

16. Dispositif de déplacement suivant l'une des revendications précédentes, caractérisé en ce que, pour obtenir un soulèvement en deux points, une unité de déplacement (1) est couplée à une autre unité de déplacement (14), de préférence non-entraînée, par l'intermédiaire d'une tringlerie (25) articulée sur les unités de déplacement (1 ou 24).
